(19) Europäisches Patentamt
European Patent Office
Office européen des brevets

(11) EP 1 950 698 A2

(12) **EUROPEAN PATENT APPLICATION**

(43) Date of publication:
**30.07.2008 Bulletin 2008/31**

(51) Int Cl.:
***G06Q 30/00*** *(2006.01)*

(21) Application number: **08100801.3**

(22) Date of filing: **23.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **23.01.2007 US 656709**
**15.01.2008 PCT/US2008/051089**

(71) Applicant: **QUIGO TECHNOLOGIES, INC.**
**New York, NY 10016 (US)**

(72) Inventors:
• **Abbott, Martin**
**Fountain Hill, NY 85268 (US)**
• **Fisher, Michael**
**Mount Kisco, NY 10549 (US)**

(74) Representative: **Harrison Goddard Foote**
**Belgrave Hall**
**Belgrave Street**
**Leeds**
**LS2 8DD (GB)**

(54) **Systems and methods for selecting aesthetic settings for use in displaying advertisements over a network**

(57) Systems and methods are provided for selecting aesthetic settings that increase, and preferably optimize, the yield (e.g., click-through rate) of advertisements displayed over a network (e.g., within internet web pages). A system can generally comprise a database and a an aesthetic yield application. The database can be configured to store a plurality of aesthetic templates, and each aesthetic template can comprises at least one aesthetic parameter and a value for the parameter. The aesthetic yield application can be configured to receive a request over the communications network. In response to the request, aesthetic yield application can select an aesthetic template from a plurality of aesthetic templates for use in displaying at least one advertisement over the communications network. Also, the aesthetic yield application can track responsiveness of the end user to the at least one advertisement displayed in accordance with the selected aesthetic template. Other embodiments are also claimed and described.

FIG. 1

EP 1 950 698 A2

**Description**

CROSS REFERENCE TO RELATED APPLICATION & PRIORITY CLAIM

This patent application claims priority to and the benefit of United States Non-Provisional Patent Application Number 11/656,709 filed 23 JANUARY 2007, which is hereby incorporated by reference in its entirety as if fully set forth below.

TECHNICAL FIELD

The present invention relates generally to systems and methods for displaying advertisements over a communications network and, more particularly, to systems and methods for selecting aesthetic settings that increase, and preferably optimize, the yield (e.g., click-through rate) of advertisements displayed within internet web pages.

BACKGROUND

Advertisements ("ads") such as banner ads and panel ads are often displayed in a web page in response to, for example, a user typing the Universal Resource Locator ("URL") for that web page into a web browser or selecting a link for the web page from a list of search results. Ads are also displayed simultaneously with lists of search results provided by search engines. The advertisements may include text, graphics, audio, and/or other media. Upon selection of an advertisement ("click through"), the web browser is typically redirected to a web page associated with the advertisement from which the user can, for example, receive additional information, place online orders, or complete other transactions.

Conventional approaches for increasing the yield of advertisements displayed over a network have focused on displaying the ads within contextually-relevant web pages. The idea is that end users are more likely to click-through or otherwise respond to an ad when it closely relates to the content of the web page in which it is displayed. After all, since the display of a web page typically requires some affirmative action by the end user (e.g., typing its URL, selecting a link for the web page, or setting the web page as a default), the belief is that the end user will be interested in its content. For example, an advertiser may pay to have its ad(s) displayed within web page(s) in the same business, cultural, or technological space. In this regard, an advertisement for a brokerage house, bank, or manufacturer of accounting software may be displayed within a web page related to stock markets and financial data. As another example, ad(s) may be displayed simultaneously with a list of contextually-relevant search results generated by an internet search engine (e.g., Google®). Determining that the search results are contextually relevant to the ad(s) may involve, for example, comparing key words or key phrases associated with the ads to key words or key phrases submitted to the search engine by an end user.

Notwithstanding improvements in ad performance that have been realized from displaying advertisements within contextually-relevant web pages, it would be advantageous to provide alternative or additional systems and methods for increasing the yield of advertisements displayed over a communications network.

BRIEF SUMMARY

Embodiments of the present invention provide systems and methods for selecting aesthetic settings for use in displaying advertisements ("ads") over a communications network (e.g., internet).

In an aspect of the present invention, systems and methods are provided for selecting aesthetic settings for use in displaying ad(s) to an end user of a computer (e.g., desktop computer). A database is provided that stores multiple aesthetic templates, where each aesthetic template includes at least one aesthetic parameter (e.g., background color) and a value for the parameter (e.g., blue). An aesthetic yield application (including software, hardware, or a combination thereof) is provided that receives a request over the communications network (e.g., a HyperText Transfer Protocol (HTTP) request from the user computer, a content publisher, or a search engine). In response to the request, the aesthetic yield application selects an aesthetic template from the multiple aesthetic templates for use in displaying at least one advertisement over the communications network. In other words, the aesthetic template specifies a look and feel for the display of the advertisement over the network. Subsequently, the aesthetic yield application tracks end user responsiveness to the advertisement. For example, the application may determine whether or not the end user clicks through or otherwise selects the advertisement.

In another aspect of the present invention, at least one database is provided that stores multiple advertisements and multiple aesthetic templates, where each aesthetic template includes at least one aesthetic parameter and a value for the parameter. Each advertisement may include text, graphic(s), video, audio, or a combination thereof. An application is provided that receives requests for advertising (e.g., HTTP requests) over a communications network. For each request, the application selects and returns at least one advertisement from the multiple advertisements and an aesthetic template from the multiple aesthetic templates for use in displaying the selected ad(s) over the communications network. The particular aesthetic template selected by the application varies for each selection according to a rotation (e.g., a random rotation, a sequential rotation, or a rotation based on past performance of the aesthetic templates). The application monitors whether end users select the ad(s) displayed in accordance with the selected aesthetic templates. In some embodiments, the application may compute a yield score for each aesthetic template based on the monitoring, and may modify the rotation based at least in part on the yield scores. In some embodiments, the application may select the at least one advertisement based at least in part on a comparison of a content of the advertisement to a content of a web page in which the ad(s) are to be displayed.

BRIEF DESCRIPTION OF DRAWINGS

For a better understanding of the present invention, reference is made to the following description, taken in conjunction with the accompanying drawings, in which like reference characters refer to like parts throughout, and in which:

FIG. 1 is a block diagram of a system for selecting aesthetic settings for use in displaying advertisements over a communications network in accordance with an embodiment of the present invention;
FIG. 2A shows an illustrative graphical representation of an ad placement region in accordance with an embodiment of the present invention;
FIGS. 2B and 2C show illustrative graphical representations of ads displayed in accordance with aesthetic templates according to embodiments of the present invention;
FIG. 3 is a flowchart of illustrative stages involved selecting aesthetic settings for use in displaying advertisements within a web page in accordance with an embodiment of the present invention;
FIGS. 4 and 5 are screen shots of an illustrative displays from which information regarding ad placement regions can be viewed and/or modified in accordance with embodiments of the present invention;
FIG. 6 is a screen shot of an illustrative display from which information regarding aesthetic templates associated with a given web page can be viewed and/or modified in accordance with an embodiment of the present invention; and
FIG. 7 is a screen shot of an illustrative report regarding end-user responsiveness to aesthetic templates that may be generated according to an embodiment of the present invention.

DETAILED DESCRIPTION OF PREFERRED & ALTERNATIVE EMBODIMENTS

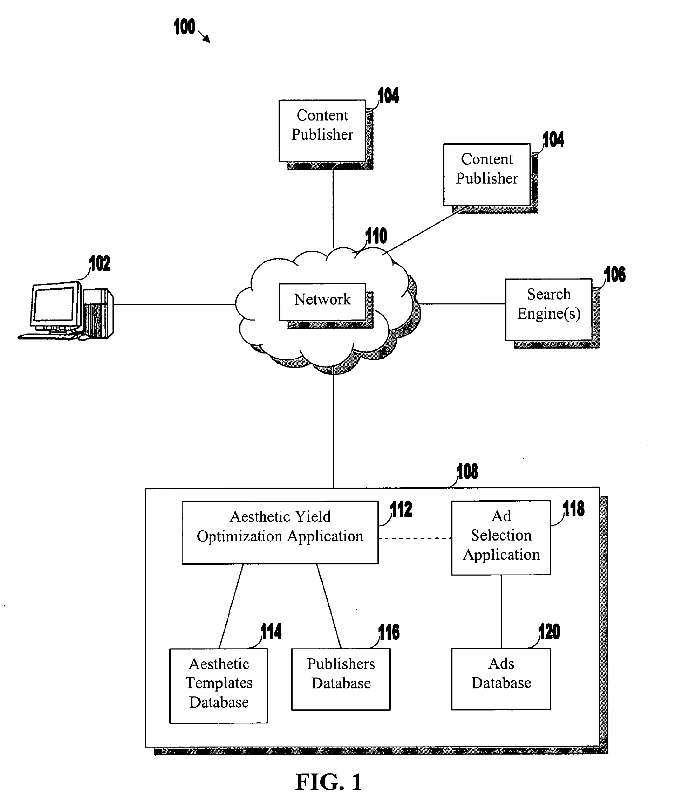

Embodiments of the present invention relate to systems and methods for selecting aesthetic settings for use in displaying advertisements ("ads") over a communications network. Each advertisement may include video, audio, text, graphics, any other suitable media, or a combination thereof. FIG. 1 is a block diagram of a system 100 in accordance with an embodiment of the present invention. System 100 includes user computer(s) 102, content publishers 104, search engine(s) 106, and aesthetic yield optimization ("AYO") system 108 that communicate with one another over network 110 (e.g., internet) or a combination of networks. Each of user computer(s) 102, content publishers 104, search engine (s) 106, and AYO system 108 may be in electrical communication with network 110 via a suitable communications capability such as, for example, a cable or satellite connection, a local area network ("LAN"), any other suitable wired, wireless, or optical connection, or a combination thereof.
User computer(s) 102 may include any suitable computing equipment for accessing content (e.g., web pages) over network 110 and displaying advertisements to end user(s) at user computer(s) 102. For example, as shown in FIG. 1, user computer 102 may be a desktop computer. In other examples, user computer 102 may be a laptop computer, telephone (e.g., mobile phone), personal digital assistant ("PDA"), BlackBerry device, or any other suitable computing device. User computer 102 may have a web browser (e.g., Internet Explorer, Netscape Navigator, Mozilla Firefox) operating thereon for facilitating communications over network 110. The web browser may access and read marked-up documents (e.g., HTML documents) from, for example, content publishers 104 or search engine(s) 106 and then translate and render those documents into web pages that can be viewed by an end user at user computer 102. Typically, system 100 will include multiple user computers 102 although only one user computer 102 is shown in FIG. 1 to avoid overcomplicating the drawing.
Each content publisher 104 may be, for example, a publisher of web page(s) over network 110. For example, one content publisher may be the computing system responsible for publishing the web pages viewable at http://www.espn.com. Another content publisher may be the computing system responsible for publishing the web pages viewable at http://www.foxnews.com. Each content publisher 104 may include one or more web servers for receiving and responding to requests from user computers 102 for access to the web page(s) provided by the content publisher. End users of user computers 102 may request access to a given web page by, for example, typing the Universal Resource Locator ("URL") for that web page into an address region of a web browser display or by selecting a link for the web page from a list of search results (e.g., Google search results).

Similarly, search engine(s) 106 may include one or more web servers for receiving and responding to requests from user computers 102 for access to an associated search capability (e.g., the search capability available at http: //www.google.com). Search engine(s) 106 may provide user computer(s) 102 with lists of search results in response to, for example, the end users of computer(s) 102 submitting key words and/or key phrases via the search capability.

AYO system 108 may include aesthetic yield optimization ("AYO") application 112, aesthetic templates database 114, and publisher database 116. AYO application 112 may include any suitable hardware, software, or combination thereof for selecting aesthetic template(s) stored in database 114 for use in displaying ad(s) over network 110. Each aesthetic template may define a display format, including aesthetic parameters (e.g., background color) and associated values (e.g., blue or white), that specifies a look and feel for the display of one or more advertisements. AYO application 112 may also track end-user responses to the ad(s) displayed according to the selected aesthetic templates and/or generate reports regarding the responses (e.g., for viewing by an administrator of system 108). For example, each time an end-user selects (e.g., clicks through) an advertisement, user computer 102 may transmit a signal to system 108 (e.g., directly or via a content publisher 104, search engine 106, or an advertiser to which a web browser operating on user computer 102 is redirected) indicating the selection. The signal may include or otherwise identify, for example, the ad selected, the aesthetic template of the selected ad, and the web page at which the selection occurred.

System 108 including AYO application 112 may be responsive to requests received by system 108 over network 110. In some embodiments, system 108 may receive and respond to requests from user computer(s) 102. For example, a browser operating on user computer 102 may submit a HyperText Transfer Protocol ("HTTP") request for access to a web page from content publisher 104 or an HTTP request for a search by search engine 106. Subsequently, the content publisher 104 or search engine 106 may provide an HTTP response that includes the requested web page or search results and instructions for submitting the request to system 108. Responsive to the request from user computer 102, AYO application 112 may select an aesthetic template for use in displaying ad(s) simultaneously with the web page or search results. In other embodiments, system 108 including AYO application 112 may be responsive to requests received by system 108 from content publisher(s) 104 or search engine(s) 106. For example, content publisher(s) 104 or search engine(s) 106 may submit requests to system 108 in response to HTTP requests received by the content publisher(s) 104 or search engine(s) 106 from user computers 102.

In some embodiments, system 108 may additionally include an ad selection application 118 for selecting advertisement(s) for display over network 110. For example, ad selection application 118 may select advertisement(s) from ads database 120 based on the requests received by system 108 over network 110 (e.g., requests from user computer(s) 102, content publisher(s) 104, or search engine(s) 106). An example of a suitable ad selection application is described in commonly-owned U.S. patent application No. 11/646,637, filed December 28, 2006, and entitled "SYSTEMS AND METHODS FOR SELECTING ADVERTISEMENTS FOR DISPLAY OVER A COMMUNICATIONS NETWORK", which is hereby incorporated by reference herein in its entirety. Ad selection application 118 may select ads for display within web pages based on any suitable criteria including, for example, relevance of the ads to the content of the web pages, bid price(s) of the associated advertisers, past performance of the ads (or similar ads) upon placement within web pages by system 108, or a combination thereof. Applications 112 and 118 are shown in FIG. 1 as being separate applications; however, in some embodiments applications 112 and 118 may share at least some of the same resources (e.g., separate software modules operating on the same hardware). Thus, when both AYO application 112 and ad selection application 118 are included in system 108, system 108 may return ad(s) displayed according to a selected aesthetic template responsive to a request from, for example, user computer 102, content publisher 104, or search engine 106. In other embodiments, no ad selection capability may be provided within system 108. For example, an ad selection capability may be located elsewhere in system 100 (e.g., at content publisher 104 or search engine 106) or not at all. Thus, in some embodiments, system 108 may return the selected aesthetic template itself responsive to a request received by system 108 over network 110.

Database 114 may include multiple aesthetic templates for use in displaying ad(s) over network 110. Each aesthetic template may specify an aesthetic parameter or a combination of aesthetic parameters as well as value(s) for those parameter(s). In some embodiments, database 114 may store sets of aesthetic templates dedicated for use in connection with the simultaneous display of ad(s) (e.g., inline ads, pop-up ads, and/or pop-under ads) with specific web pages from specific content publishers 104 or search engine(s) 106. For example, database 114 may store one or more aesthetic templates dedicated for displaying ad(s) on the web page http://www.foxnews.com/foxlife/index.html. In some embodiments, when more than one aesthetic template is defined for a web page, one of the aesthetic templates may be designated (e.g., through an action by an administrator of system 108) as a default template that is displayed when, for example, selection by AYO application 112 from amongst the multiple aesthetic templates is not enabled (e.g., because insufficient test data exists regarding end-user responsiveness to the aesthetic templates and/or because a given percentage of all impressions are reserved for the default template). Examples of suitable aesthetic parameters and values for those parameters include the following:

ADLOCATION (location of ad(s) relative to the space provided for the ad(s)): VALUES (left justified, right justified, centered)

BACKGROUND_COLOR (color of the background of the ad(s) themselves on which text and/or graphics/video can be displayed): VALUES (any color such as white, blue, red, yellow, etc.)

BEHAVIOR (characteristic regarding how the ad(s) are displayed): VALUES (same window as web page, pop-up, pop-under, new window created)

BODY_COLOR (color of text of the body or description of the ad): VALUES (any color) BODY_SIZE (font size of text in the body of the ad(s)): VALUES (any font size)

DIMENSION (size in pixels of the ad(s) displayed in terms of width and height): VALUES (any pixel sizes for height and width)

EXT_BORDER (boolean indicating whether a border is displayed around all ad(s)): VALUES (true, false)

EXT_BORDER_COL (color of external border if present): VALUES (any color)

INT_BORDER (boolean indicating whether to display a border between ads within a given ad unit): VALUES (true, false)

INT_BORDER_COL (color of internal border if present): VALUES (any color)

SHOWIMAGE (boolean indicating whether to display graphic(s) with the ad(s)): VALUES (true, false)

TITLE_COLOR (color of the title(s) of the ad(s)): VALUES (any color)

TITLE_FORMAT (formatting instructions for the title such as italicize, bold, underline): VALUES (normal, bold, underline, etc.)

URL_PRESENT (boolean indicating whether to display the URL(s) of ad(s)): VALUES (true, false)

URL_COLOR (color(s) of the URL(s) if present): VALUES (any color(s))

URL_FORMAT (formatting instructions for the URL): VALUES (bold, normal, italics, underline)

URL_SIZE (font (point) size for the URL): VALUES (any font and point sizes)

TITLE_PRESENT (boolean indicating whether to display title(s) for ad(s)): VALUES (true, false)

BODY_PRESENT (boolean indicating whether to display the bod(ies) or description(s) of ad(s)): VALUES (true, false)

NUMBER_ADS (value indicating the number of ads to display within a template): VALUES (e.g., 1 through 20)

HEADER/FOOTER_PRESENT (boolean indicating whether to display a header/footer or not): VALUES (true, false)

HEADER_TEXT (text for display within the header/footer): VALUES (e.g., ASCII text up to 45 characters)

HEADER_COLOR (background color of header/footer): VALUES (any color)

HEADER_TEXT_COLOR (color of text within the header/footer): VALUES (any colors)

HEADER_FONT (type of font to display in header/footer): VALUES (any font type such as Helvetica, sans sarif, times new roman, etc.)

HEADER_FONT_SIZE (font (point) size of font in the header/footer if text is available): VALUES (any font (point) size such as 1, 25, etc)

HEADER_LOCATION (position of header/footer relative to the ad(s)): VALUES (upper, lower)

HEADER_FORMAT (formatting instructions for the header text): VALUES (normal, bold, italics, underline)

The foregoing list of aesthetic parameters and values for those parameters are only illustrative and are not intended to be limiting with respect to the present invention. Any other suitable aesthetic parameters and/or values may be provided for specifying the display characteristics of ads displayed over network 110.

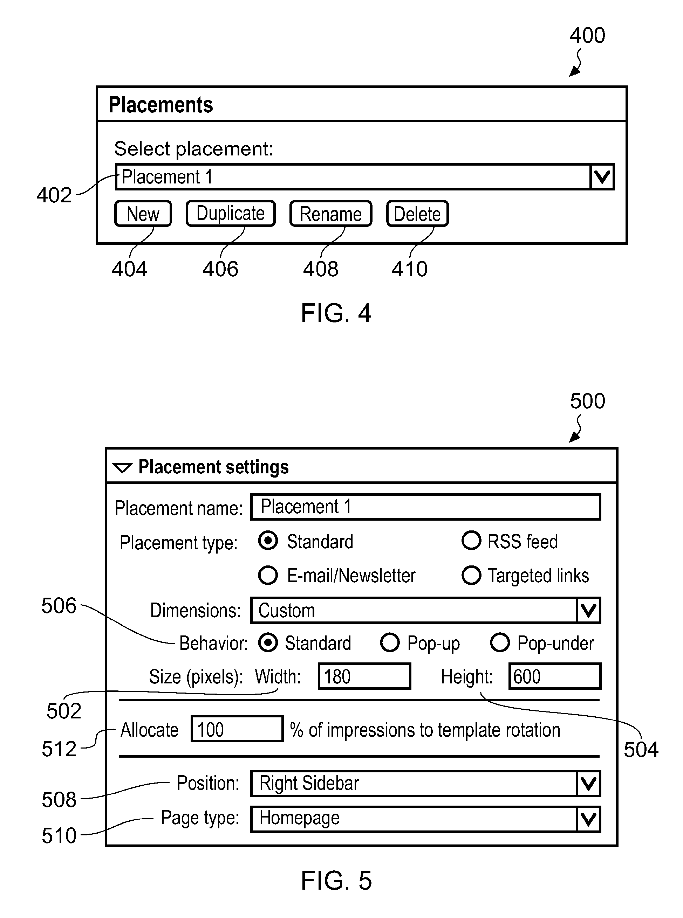

Database 116 may include information regarding content publishers 104 and/or search engine(s) 106 within system 100 including, for example, information identifying the web pages provided by content publishers 104 and search engine(s) 106 (e.g., a list of their respective URLs), information regarding the content of those web pages (e.g., topics/themes), information indicative of the aesthetic template(s) used previously for the display of ad(s) on the web page(s) (e.g., respective numbers of impressions for the aesthetic templates), information regarding the performance of the aesthetic templates (e.g., yield scores for the templates based on ad click-through rates, revenue generated, and/or other suitable criteria), and/or information regarding the ads displayed previously on those web pages and/or the performance thereof. Alternatively or additionally, publishers database 116 may store information regarding preferences of content publisher(s) 104 and/or search engine(s) 106 such as, for example, information regarding the aesthetic parameter(s) and/or value(s) that may be varied for ad(s) that are displayed within their respective web page(s), information regarding aesthetic parameter(s) and/or value(s) that are specifically disallowed (e.g., a pink background color for ad(s) displayed on a web page related to men's sports), and/or information regarding aesthetic parameter(s) and/or value(s) that are specifically required (e.g., a pink background color for ad(s) displayed on a web page related to breast cancer awareness). Such preferences may be used by an administrator of system 108 to define the aesthetic templates included in database 114. Illustrative systems and methods for defining aesthetic templates are described below in connection with FIGS. 4-7. When, for example, system 108 additionally includes ad selection application 118 and ads database 120, database 116 may store other information such as information regarding the ad(s) or types of ad(s) eligible for display (or specifically disallowed) on the web pages provided by content publishers 104 and/or search engine(s) 106.

Ads database 120 may store advertisement(s) for display within the web pages provided by content publisher (s) 104 and/or search engine(s) 106 and accessed by user computers 102. The ads stored in database 112 may be downloaded from advertiser(s) over network 110 or received by system 108 according to any other suitable approach (e.g., uploaded from portable storage media such as a digital video discs provided by the advertisers). Alternatively or additionally, ads database 120 may store information associated with the advertisements including, for example, topics/ themes (e.g., for determining relevance of the ads to given web pages), closed captioning information, information regarding the size, resolution, and or/duration (e.g., in seconds) of the ads, information regarding past performance of the advertisements (e.g., numbers of impressions by system 108 and/or click-throughs by end users of user computers 102), associated advertiser identifiers (e.g., for linking to billing information for the advertisers), bid and/or purchase amounts by the advertisers, and/or other criteria regarding the display of the ads within web pages provided by content publisher(s) 104 and/or search engine(s) 106 (e.g., an identification of one or more web pages in which a given ad is eligible for display). As used herein, a theme or topic refers to the contextual gist of content (e.g., advertisement or web page). Illustrative examples of themes/topics are "San Francisco 49ers", "Airplane Accident", and "Bahamas Travel". In the embodiment of FIG. 1, aesthetic templates database 114, publishers database 116, and ads database 120 are shown as separate databases, although it will be understood that alternative arrangements are possible. For example, a single database may be provided that stores the information just described as being stored in databases 114, 116, and 120.

AYO system 108 may establish relationships with one or more content publishers 104 and/or search engines 106 in order to allow system 108 to place ads and/or vary the aesthetic parameters/values of those ads within the web pages provided by the publishers and search engines. Establishing a relationship with a content publisher 104 or search engine 106 may include negotiating a revenue-sharing arrangement between AYO system 108 and the content publisher or search engine for revenue generated as a result of displaying ads within the web pages and/or subsequent actions by end-users of user computers 102. Alternatively or additionally, establishing a relationship with a content publisher 104 or search engine 106 may include managing interoperability between system 108 and the content publisher or search engine to, for example, minimize the latency perceived by end-users of user computers 102. Managing system interoperability may include establishing a protocol for communications upon access of the web pages by end users of user computers 102 (e.g., communications between content publisher 104 or search engine 106 and user computer 102, between user computer 102 and AYO system 108, and/or between AYO system 108 and content publisher 104 or search engine 106).

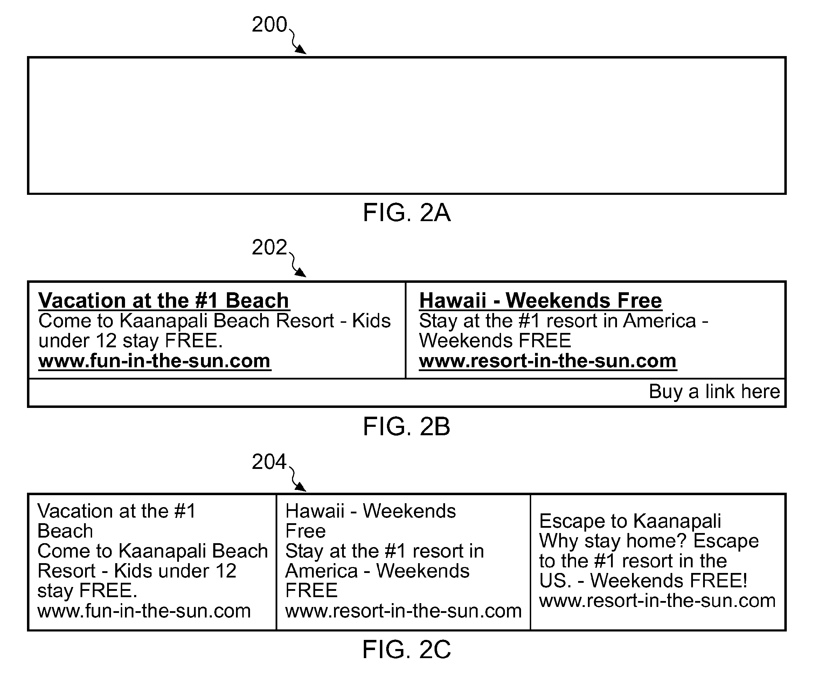

FIG. 2A shows an illustrative graphical representation 200 of an ad placement region in accordance with an embodiment of the present invention. The ad placement region may be a blank space having certain dimensions (e.g., pixel size of width and height) and an associated location within a web page (not shown). Information regarding the ad placement region such as its dimensions and/or location within the web page may be included, for example, in the request received by system 108 over network 110 or stored in publishers database 116 (e.g., accessible by looking up the URL of the web page or other identifier, which may be received in the request).

FIGS. 2B and 2C show illustrative graphical representations (202, 204) of banner ads (e.g., ads selected by ad selection application 118 from database 120) displayed in accordance with aesthetic templates selected according to embodiments of the present invention. As shown, banner ad 202 may include the following aesthetic parameters and values therefor:

ADLOCATION (left_justified);
BACKGROUND_COLOR (pink); BEHAVIOR (new window); BODY_COLOR (black);
BODY_SIZE (10); DIMENSION (120x30); EXT_BORDER (true);
EXT_BORDER_COL (black); INT_BORDER (true); INT_BORDER_COL (black);
SHOWIMAGE (false); TITLE_COLOR (blue); TITLE_FORMAT (underline, bold);
TITLE_SIZE (font 10); FONT_TYPE (Helvetica); URL_COLOR (green);
URL_FORMAT (underline, bold); URL_SIZE (6); TITLE_PRESENT (true);
BODY_PRESENT (true); URL_PRESENT (true); NUMBER_ADS (2);
HEADER_PRESENT (true); HEADER_TEXT (Buy a Link Here); HEADER_URL (www.quigo.com); HEADER_
COLOR (gray); HEADER_TEXT_COLOR (black);
HEADER_LOCATION (lower); HEADER_FONT (Helvetica); HEADER FONT SIZE (10); and
HEADER FORMAT (normal).

Aesthetic template 204 may includes the following aesthetic parameters and values therefor: ADLOCATION (left_justified); BACKGROUND_COLOR (dark blue); BEHAVIOR (new window); BODY_COLOR (white); BODY_SIZE (10); DIMENSION (120x30); EXT_BORDER (false); EXT_BORDER_COL (null); INT_BORDER (true); INT_BORDER_ COL (white); SHOWIMAGE (false); TITLE_COLOR (red); TITLE_Format (normal); TITLE_SIZE (font 10); FONT_TYPE (Helvetica); URL_COLOR (light blue); URL_FORMAT (normal); URL_SIZE (6); TITLE_PRESENT (true); BODY_PRESENT true); URL_PRESENT (true) NUMBER_ADS (3); HEADER_PRESENT (false); HEADER_TEXT (null); HEADER_URL (null); HEADER_COLOR (null); HEADERTEXT_COLOR(null); HEADER_LOCATION (null); HEADER_ FONT (null); HEADER_FONT_SIZE (null); and HEADER_FORMAT (null).

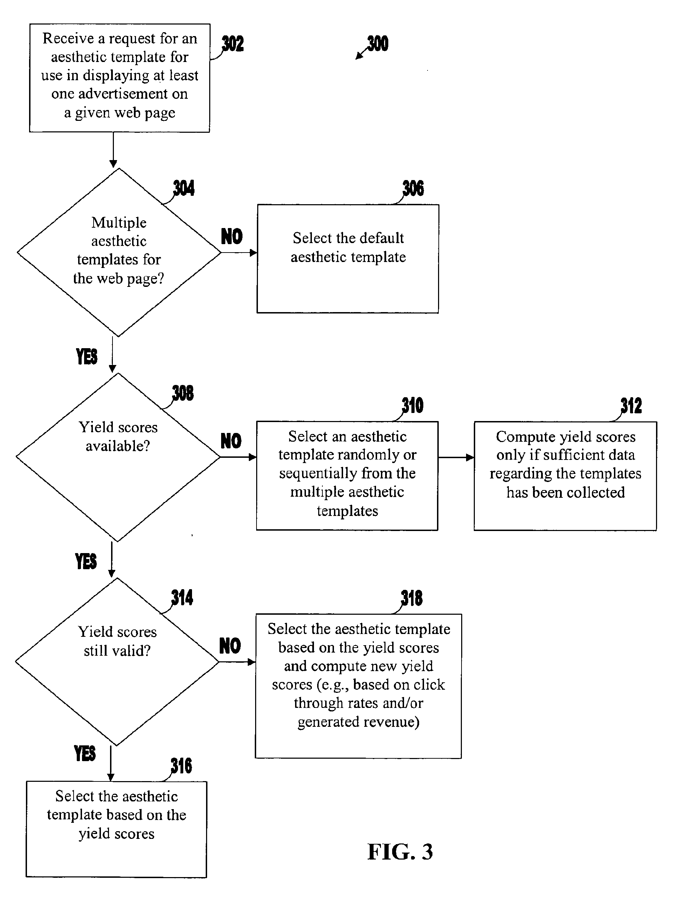

FIG. 3 is a flowchart 300 of illustrative stages involved in selecting aesthetic settings for use in displaying advertisement(s) over a network in accordance with an embodiment of the present invention. Generally, during testing multiple combinations of aesthetic parameter(s) and value(s) therefor may be used to display ad(s) within interne web pages. A yield score may be determined for each of the combinations based on advertisement click-through rates, revenue generated, and/or other suitable criteria. Based on the yield scores, aesthetic parameters may be selected for future ad placement opportunities. At stage 302, a request may be received for an aesthetic template for use in displaying at least one advertisement on a given web page, where the aesthetic template may be associated with at least one aesthetic parameter and a value therefor. For example, stage 302 may involve system 108 receiving a request over network 110 from a user computer 102, content publisher 104, or search engine 106. In some embodiments (e.g., when ad selection application 118 and ads database 120 are included in system 108), the request may also serve as a request for the ad(s) themselves.

At stage 304, a determination is made as to whether multiple (N >1) aesthetic templates are defined for the web page. For example, stage 304 may involve checking whether multiple aesthetic templates for the web page are stored in database 114. If the determination is negative, for example, when aesthetics testing is not enabled for that web page and only a single, default aesthetic template is defined, the default aesthetic template may be selected at stage 306.

If multiple aesthetic templates are defined for the web page, a determination is made at stage 308 as to whether yield scores are available for those templates (e.g., stored in database 114 or 116). Illustrative methods for computing yield scores are described in greater detail below.

If no yield scores are available (i.e., the determination at stage 308 is negative), at stage 310 an aesthetic template may be selected randomly or sequentially (for example) from the multiple aesthetic templates. For random selection, each aesthetic template in the set of N aesthetic templates may have a probability of 1/N of being selected. For sequential selection, a first opportunity to place ad(s) within the ad placement region may be allocated to the first aesthetic template, a second opportunity to place ad(s) within the ad placement region may be allocated to the second aesthetic template, and so on until the Nth ad placement opportunity is allocated to the Nth aesthetic template. The (N +1)th ad placement opportunity may then be allocated to the first aesthetic template to restart the sequence. In some embodiments, the random or sequential selection of aesthetic templates may continue for all future requests for aesthetic templates relating to the given web page until sufficient data regarding the multiple aesthetic templates has been collected. For example, the random or sequential selection may continue for a predetermined time (e.g., at least 24 hours) and/or until each of the aesthetic templates has been allocated a predetermined minimum number of impressions (e.g., 1000 or some other statistically significant number). Once sufficient data regarding the aesthetic templates has been collected, at stage 312 yield scores may be computed for the multiple aesthetic templates. Then, the yield scores may be used for the selection of aesthetic templates in response to subsequent requests.

If yield scores are available for the multiple aesthetic templates (i.e., the determination at stage 308 is affirmative), a determination is made at stage 314 as to whether the yield scores are still valid. Stage 314 may be optionally included when, for example, yield scores expire after a predetermined time (e.g., 24 hours) within system 108. If the yield scores are still valid, at stage 316 the yield scores may be used to select an aesthetic template from the multiple aesthetic templates. Illustrative methods for selecting an aesthetic template based on yield scores are described in greater detail below. If the yield scores have expired, at stage 318 the yield scores may still be used to select an aesthetic template for the current request (request 302), but new yield scores may be computed for use in connection with future requests. In other embodiments, new yield scores may be computed at stage 318 and used to select an aesthetic template for the current request.

The following provides additional details regarding computing yield scores for aesthetic templates. In one embodiment, a yield score for the Nth aesthetic template from a set of N templates may be determined according to the following equation:

$$\text{Nth Yield Score} = (\text{CTR}_N/(\text{CTR}_1 + \text{CTR}_2 + \ldots + \text{CTR}_N))^X$$

where $\text{CTR}_N$ is the click through rate for the Nth aesthetic template (i.e., the number of times an end-user selects an advertisement displayed according to the Nth aesthetic template divided by the total number of impressions allocated to the Nth aesthetic template) and x is a power factor that affects the weighting of the click-through rates in the equation. In some embodiments, x may be equal to one. For example, for a set of N = 2 aesthetic templates (e.g., templates corresponding to FIGS. 2B and 2C), for $\text{CTR}_1 = 0.26$ and $\text{CTR}_2 = 0.31$, and x = 1, aesthetic template 1 will have a score of 0.26/(0.31+0.26) = 0.456. Aesthetic template 2 will have a score of .31/.57 = 0.544. If x is changed to 2, aesthetic template 1 will have a score of (.456)^2 = 0.20 and aesthetic template 2 will have a score of (.544)^2 = 0.29. Thus, by changing the power factor from 1 to 2, the probability that AYO application 112 will select aesthetic template 1 versus aesthetic template 2 changes substantially. In the first case, template 2 has a 19% greater likelihood of being served, whereas in the second case, it is 45% more likely to be selected. The value of x may be selectable by, for example, an administrator of system 108.

In some embodiments, a new aesthetic template may be added to a set of aesthetic templates already in rotation by AYO application 112. In this situation, AYO application 112 may allocate to the new template an average impression share of 1/N of impressions, where N is the number of templates. The impression ratio(s)/probabilities used by AYO application 112 for selection from amongst the other templates may be preserved.

FIG. 4 is a screen shot 400 of an illustrative display from which a user (e.g., administrator of system 108) can select option 402 to view information regarding an existing ad placement region associated with a given web page or option 404 to create a new aesthetic template. A duplicate option 406 may also be provided for duplicating information regarding an existing ad placement region for use in connection with a new ad placement region (e.g., as a starting point for registering an ad placement region on a new web page or in a different location on the same web page). The duplicated placement may initially have identical settings to those of the source placement, as well as all templates associated with it. Option 408 may be provided for renaming an existing ad placement region. Option 410 may be provided for deleting an existing ad placement region.

FIG. 5 is a screen shot 500 of an illustrative display from which the user can define initially or modify, for example, width 502 and height 504 of a placement region, as well as its behavior/ad type 506 (inline, pop-up, pop-under), location/position 508, and page type 510. When settings are changed, a layout sample may appear in a preview pane (not shown). The inclusion of fields "Position" and "Page Type" may allow AYO application 112 to gather and track data such as, for example, variance in click-through rates between common placement positions (above/below fold, right/left) and between different page types. Rotation percentage 512 may allow the user to modify the percentage of impressions reserved for allocation to a default aesthetic template versus the percentage of impressions reserved for allocation based on selection by AYO application 112 from the full set of aesthetic templates. For example, a default rotation percentage may be that 100% percent of impressions are reserved for allocation based on selections by AYO application 112.

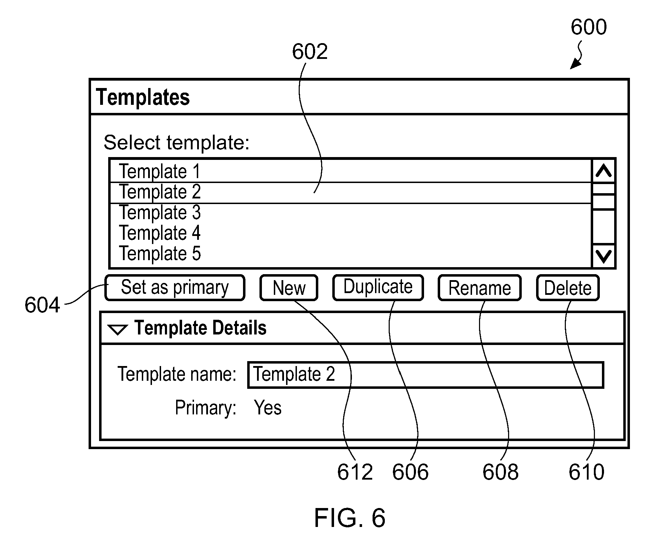

FIG. 6 is a screen shot 600 of an illustrative display of information regarding aesthetic templates associated with a given ad placement region on a web page. When the title of an aesthetic template is marked by highlight region 602, the user may be permitted to change the default/primary template with option 604, duplicate the template with option 606, rename the template with option 608, and delete the template with option 610. Option 612 may be provided for creating a new template.

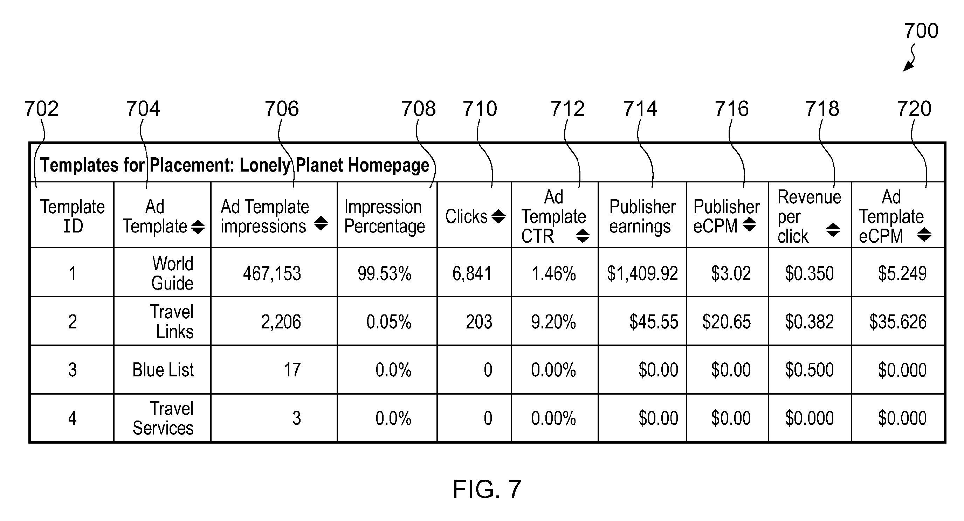

FIG. 7 is a screen shot 700 of an illustrative report that may be generated by AYO system 108 (e.g., for viewing by an administrator of system 108). The report may include information such as template IDs 702 (e.g., for templates associated with web pages of the same web domain), template names 704, respective numbers of impressions 706, percentages of impressions allocated 708, click-throughs 710, click-through rates 712, content publisher earnings 714, publisher earnings per thousand impressions (eCPM) 716, total revenue per click 718 (e.g., 50 to 80% percent of total revenue may go to the publisher 104 or search engine 106 and the remainder may go to system 108), and ad template cost per thousand impressions 720 (e.g., eCPM = ad template eCPM multiplied by publishers share of earnings (e.g., 50 to 80 %)).

Thus it is seen that systems and methods are provided for selecting aesthetic parameters for use in displaying advertisements over a network. Although particular embodiments have been disclosed herein in detail, this has been done by way of example for purposes of illustration only, and is not intended to be limiting with respect to the scope of the appended claims, which follow. In particular, it is contemplated by the inventors that various substitutions, alterations, and modifications may be made without departing from the spirit and scope of the invention as defined by the claims. Other aspects, advantages, and modifications are considered to be within the scope of the following claims. The claims presented are representative of the inventions disclosed herein. Other, unclaimed inventions are also contemplated. The inventors reserve the right to pursue such inventions in later claims.

Insofar as embodiments of the invention described above are implementable, at least in part, using a computer system, it will be appreciated that a computer program for implementing at least part of the described methods and/or the described systems is envisaged as an aspect of the present invention. The computer system may be any suitable apparatus, system or device, electronic, optical, or a combination thereof. For example, the computer system may be a programmable data processing apparatus, a general purpose computer, a Digital Signal Processor, an optical computer or a microprocessor. The computer program may be embodied as source code and undergo compilation for implementation on a computer, or may be embodied as object code, for example.

It is also conceivable that some or all of the functionality ascribed to the computer program or computer system aforementioned may be implemented in hardware, for example by means of one or more application specific integrated circuits and/or optical elements. Suitably, the computer program can be stored on a carrier medium in computer usable form, which is also envisaged as an aspect of the present invention. For example, the carrier medium may be solid-state memory, optical or magneto-optical memory such as a readable and/or writable disk for example a compact disk (CD) or a digital versatile disk (DVD), or magnetic memory such as disk or tape, and the computer system can utilize the program to configure it for operation. The computer program may also be supplied from a remote source embodied in a carrier medium such as an electronic signal, including a radio frequency carrier wave or an optical carrier wave.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. A system for selecting aesthetic settings for use in displaying advertisements over a communications network to an end user of a computer, the system comprising:

   a database configured to store a plurality of aesthetic templates, wherein each aesthetic template comprises at least one aesthetic parameter and a value for the parameter;
   and an aesthetic yield application configured to: receive a request over the communications network;
   in response to the request, select an aesthetic template from the plurality of aesthetic templates for use in displaying at least one advertisement over the communications network; and
   track responsiveness of the end user to the at least one advertisement displayed in accordance with the selected aesthetic template.

2. The system of claim 1, wherein the aesthetic yield application is further configured to select an aesthetic template in response to a subsequent request based at least in part on the tracking.

3. The system of claim 1 or claim 2, wherein the plurality of aesthetic templates are associated with a given web page and wherein the request identifies the given web page.

4. The system of any preceding claim, wherein the at least one advertisement includes text, a graphic, video, audio, or a combination thereof.

5. The system of any preceding claim, wherein the at least one aesthetic parameter is selected from the group of aesthetic parameters consisting of advertising location, background color, advertising behavior, body presence, body color, body size, advertising dimension, external border presence, external border color, internal border presence, internal border color, presence of graphic(s), title presence, title color, title format, Universal Resource Locator (URL) presence, URL color, URL format, URL size, number of ads, header/footer presence, header/footer text, header/footer color, header/footer font, header/footer font size, header/footer location, and header/footer format.

6. A system for selecting aesthetic settings for use in displaying advertisements over a communications network to end users of computers, the system comprising:

   at least one database configured to store a plurality of advertisements and a plurality of aesthetic templates, wherein each aesthetic template comprises at least one aesthetic parameter and a value for the parameter; and
   an application configured to:

   receive requests for advertising over the communications network;
   for each request, select and return at least one advertisement from the plurality of advertisements and an aesthetic template from the plurality of aesthetic templates for use in displaying the selected at least one advertisement over the communications network, wherein the particular aesthetic template selected by the application varies from selection to selection according to a rotation; and monitor whether the end users select the advertisements displayed in accordance with the selected aesthetic templates.

**7.** The system of claim 6, wherein the rotation comprises a random rotation.

**8.** The system of claim 6 or claim 7, wherein the rotation comprises a sequential rotation.

**9.** The system of any one of claims 6 to 8, wherein the rotation is based, at least in part, on past performance of the aesthetic templates with respect to receiving selections by end-users of advertisements displayed in accordance with the aesthetic templates.

**10.** The system of any one of claims 6 to 9, wherein the application is further configured to:

compute a yield score for each of the aesthetic templates based on the monitoring; and modify the rotation based at least in part on the yield scores.

**11.** The system of any one of claims 6 to 10, wherein the application is further configured to select the at least one advertisement based at least in part on a comparison of a content of the at least one advertisement to a content of a web page in which the at least one advertisement will be displayed.

**12.** The system of any one of claims 6 to 11, wherein the requests comprise Hypertext Transfer Protocol (HTTP) requests.

**13.** A method for selecting aesthetic settings for use in displaying advertising within a page, the method comprising:

storing a plurality of advertisements;
storing a plurality of aesthetic templates, wherein each aesthetic template comprises at least one aesthetic parameter and a value for the parameter;
receiving a first request and a second request for advertising for display within the page;
for each request, selecting and returning at least one advertisement from the plurality of advertisements and an aesthetic template from the plurality of aesthetic templates for use in displaying the selected at least one advertisement, wherein the particular aesthetic template selected varies from the first selection to the second selection according to a rotation; and
monitoring end user selections of the advertisements displayed in accordance with the selected aesthetic templates.

**14.** The method for selecting aesthetic settings of claim 13, wherein the selecting according to a rotation comprises selecting according to a random rotation.

**15.** The method for selecting aesthetic settings of claim 13 or claim 14, wherein the selecting according to a rotation comprises selecting according to a sequential rotation.

**16.** The method for selecting aesthetic settings of any one of claims 13 to 15, wherein the selecting according to a rotation comprises selecting based at least in part on past performance of the aesthetic templates with respect to receiving selections by end-users of advertisements displayed in accordance with the aesthetic templates.

**17.** The method for selecting aesthetic settings of any one of claims 13 to 16, further comprising:

computing yields for each of the aesthetic templates based on the monitoring; and
modifying the selecting based at least in part on the yields.

**18.** The method for selecting aesthetic settings of any one of claims 13 to 17, wherein the page is a web page and wherein selecting the at least one advertisement comprises comparing a content of the at least one advertisement to a content of the web page.

**19.** The method for selecting aesthetic settings of any one of claims 13 to 18, wherein the plurality of aesthetic templates are associated with a given web page and wherein the request identifies the given web page.

**20.** A system for selecting aesthetic settings for use in displaying advertisements over a communications network to end users of computers, the system comprising:

means for storing a plurality of advertisements;

means for storing a plurality of aesthetic templates, wherein each aesthetic template comprises at least one aesthetic parameter and a value for the parameter;

means for receiving a first request and a second request for advertising for display within a page;

means for selecting and returning, for each request, at least one advertisement from the plurality of advertisements and an aesthetic template from the plurality of aesthetic templates for use in displaying the selected at least one advertisement, wherein the particular aesthetic template selected varies from the first selection to the second selection according to a rotation; and

means for monitoring end user selections of the advertisements displayed in accordance with the selected aesthetic templates.

100

102

104
Content
Publisher

104
Content
Publisher

110
Network

106
Search
Engine(s)

108

Aesthetic Yield
Optimization Application  112

Ad
Selection
Application  118

114
Aesthetic
Templates
Database

116
Publishers
Database

120
Ads
Database

**FIG. 1**

200

FIG. 2A

202

| **<u>Vacation at the #1 Beach</u>**<br>Come to Kaanapali Beach Resort - Kids under 12 stay FREE.<br>**<u>www.fun-in-the-sun.com</u>** | **<u>Hawaii - Weekends Free</u>**<br>Stay at the #1 resort in America - Weekends FREE<br>**<u>www.resort-in-the-sun.com</u>** |
|---|---|
| | Buy a link here |

FIG. 2B

204

| Vacation at the #1 Beach<br>Come to Kaanapali Beach Resort - Kids under 12 stay FREE.<br>www.fun-in-the-sun.com | Hawaii - Weekends Free<br>Stay at the #1 resort in America - Weekends FREE<br>www.resort-in-the-sun.com | Escape to Kaanapali<br>Why stay home? Escape to the #1 resort in the US. - Weekends FREE!<br>www.resort-in-the-sun.com |
|---|---|---|

FIG. 2C

EP 1 950 698 A2

```
                                                     300
  Receive a request for an
  aesthetic template for        302
  use in displaying at least
  one advertisement on
  a given web page
              │
              │
              ▼
          ◇ 304                          306
       Multiple                    ┌─────────────────┐
       aesthetic        NO         │ Select the default │
       templates for   ────────────▶│ aesthetic template │
       the web page?              └─────────────────┘
          ◇
         YES │
             ▼
         ◇ 308                    310                      312
      Yield scores        ┌─────────────────┐   ┌─────────────────┐
      available?    NO     │ Select an aesthetic │ │ Compute yield scores │
                 ──────────▶│ template randomly or │─▶│ only if sufficient data │
                           │ sequentially from the │ │ regarding the templates │
                           │ multiple aesthetic    │ │ has been collected   │
                           │ templates            │ └─────────────────┘
         ◇                 └─────────────────┘
        YES │
            ▼
        ◇ 314                      318
     Yield scores         ┌─────────────────────┐
     still valid?   NO     │ Select the aesthetic template │
                ──────────▶│ based on the yield scores │
                           │ and compute new yield  │
                           │ scores (e.g., based on click │
                           │ through rates and/or  │
                           │ generated revenue)    │
        ◇                  └─────────────────────┘
       YES │
           │ 316
           ▼
  ┌─────────────────┐
  │ Select the aesthetic │
  │ template based on the │
  │ yield scores        │
  └─────────────────┘
```

**FIG. 3**

**400**

**Placements**

Select placement:

| Placement 1 | ∨ |

402

New — Duplicate — Rename — Delete

404    406    408    410

FIG. 4

**500**

▽ **Placement settings**

Placement name: | Placement 1 |

Placement type:  ⦿ Standard        ◯ RSS feed

◯ E-mail/Newsletter    ◯ Targeted links

506 — Dimensions: | Custom | ∨ |

Behavior: ⦿ Standard    ◯ Pop-up    ◯ Pop-under

Size (pixels):  Width: | 180 |    Height: | 600 |

502

512 — Allocate | 100 | % of impressions to template rotation

504

508 — Position: | Right Sidebar | ∨ |

510 — Page type: | Homepage | ∨ |

FIG. 5

**Templates** — 602, 600

Select template:

| | |
|---|---|
| Template 1 | ∧ |
| Template 2 | |
| Template 3 | |
| Template 4 | |
| Template 5 | ∨ |

[ Set as primary ] — 604   [ New ]   [ Duplicate ]   [ Rename ]   [ Delete ]

▽ **Template Details**

Template name:  [ Template 2 ]

Primary:  Yes

612  606  608  610

## FIG. 6

700

| 702 | 704 | 706 | 708 | 710 | 712 | 714 | 716 | 718 | 720 |

| Templates for Placement: Lonely Planet Homepage | | | | | | | | | |
|---|---|---|---|---|---|---|---|---|---|
| Template ID | Ad Template ⬍ | Ad Template impressions ⬍ | Impression Percentage | Clicks ⬍ | Ad Template CTR ⬍ | Publisher earnings | Publisher eCPM ⬍ | Revenue per click ⬍ | Ad Template eCPM ⬍ |
| 1 | World Guide | 467,153 | 99.53% | 6,841 | 1.46% | $1,409.92 | $3.02 | $0.350 | $5.249 |
| 2 | Travel Links | 2,206 | 0.05% | 203 | 9.20% | $45.55 | $20.65 | $0.382 | $35.626 |
| 3 | Blue List | 17 | 0.0% | 0 | 0.00% | $0.00 | $0.00 | $0.500 | $0.000 |
| 4 | Travel Services | 3 | 0.0% | 0 | 0.00% | $0.00 | $0.00 | $0.000 | $0.000 |

FIG. 7

EP 1 950 698 A2

## REFERENCES CITED IN THE DESCRIPTION

**Patent documents cited in the description**

- US 11656709 B
- US 64663706 A